# EUROPEAN PATENT APPLICATION

(11) **EP 3 319 162 A1**
(43) Date of publication of application: **09.05.2018**
(21) Application number: 16197765.7
(22) Date of filing: 08.11.2016
(51) Int. Cl.: H01M 10/054, H01M 4/583

(54) **ALUMINIUM - IONIC LIQUID - GRAPHITE - BATTERY**

(71) Applicant: ETH Zurich, 8092 Zurich (CH)
(72) Inventor: KRAVCHYK, Kostinantyn, 8052 Zürich (CH); KOVALENKO, Maksym, 8006 Zürich (CH); WANG, Shutao, 8303 Bassersdorf (CH)

(57) **Abstract**

The present invention relates to aluminium - ionic liquid - graphite batteries (AILGB), comprising an improved cathode material selected from the group of flake-shaped graphite. Particularly suitable flake shaped graphite contains flakes having an average plane size diameter of 5-5000 μm, a thickness of 1-200 μm and an aspect ratio (plane size : thickness) of 100:1 to 5:1. The invention further relates to methods of manufacturing such flake-shaped graphite and such batteries as well as to the use of such flake-shaped graphite.

## Description

The present invention relates to aluminium - ionic liquid - graphite batteries (AILGB), comprising improved cathode materials, to methods of manufacturing such cathode materials and batteries as well as to the use of such material.

Aluminum batteries emerge as a highly promising post-Li-ion technology for low cost and/or large scale storage of electricity. In such batteries, metallic Al is used as high-energy-density anode material, and in this regard is superior to unsafe metallic Na, Li, Ca or K. It also has very high charge storage capacity (2.98 Ah/g for Al, 3.86 Ah/g for Li, 1.17 Ah/g for Na, 2.21 Ah/g for Mg, 1.34 for Ah/g Ca and 0.69 Ah/g for K). In addition, aluminum is nontoxic and one of the most abundant chemical elements on Earth. Such compelling set of properties makes aluminum batteries a highly promising technology. However, numerous problems, such as performance, cost considerations and manufacturing, are to be solved.

Lin, M.-C. et al. (Nature, 2015, 520, p.325ff and WO2015/131132) disclose an ultrafast rechargeable AILGB. According to that document, a three-dimensional graphitic foam cathode is used. The manufacturing of the specific cathode material requires a templated based CVD process, which makes it difficult for large-scale and low-cost manufacturing. The thus obtained AILGBs are reported to have a capacity of 70mAh/g and a discharge voltage plateau near 2 volts. Such values are considered acceptable for a number of applications, an improvement thereof appears desirable.

Jiao et al (Carbon, 2016, 109, p.276ff) disclose an industrialized prototype of an AILGB using a cathode consisting of commercial carbon paper. The thus obtained AILGBs are reported to have a capacity of 70mAh/g and a discharge voltage decreasing in the range of 2 to 1.4 volts (average of 1.7 volts). Such values are considered acceptable for a number of applications, an improvement thereof appears desirable. Although Jiao et al disclosed some analytical details of the carbon paper used, it remains unclear which type of carbon paper was used, how it was manufactured or from which supplier obtained, making it impossible to verify the reported data.

Sun et al (Chem. Commun., 2015, 51, p.11892ff) of the same working group provide also report on a new AILGB with high voltage, high safety and low cost. The cathode of this battery consists of carbon paper. This carbon is described as ultrathin crumpled nanosheets with hundreds of nanometers in diameter. The performance of this battery is about the same as discussed above, Jiao et al. Also as above, Sun et al disclosed some analytical details of the carbon paper used. Nevertheless, it remains unclear which type of carbon paper was actually used, how it was manufactured or from which supplier obtained, making it impossible to verify the reported data.

Thus, it is an object of the present invention is to mitigate at least some of these drawbacks of the state of the art. In particular, it is an aim of the present invention to provide AILGBs that shows improved performance and / or simplified manufacturing.

These objectives are achieved by the AILGB as defined in claim 1 and the manufacturing method as defined in claim 6. Further aspects of the invention are disclosed in the specification and independent claims, preferred embodiments are disclosed in the specification and the dependent claims.

The present invention will be described in more detail below. It is understood that the various embodiments, preferences and ranges as provided / disclosed in this specification may be combined at will. Further, depending of the specific embodiment, selected definitions, embodiments or ranges may not apply.

Unless otherwise stated, the following **definitions** shall apply in this specification:
As used herein, the term "a", "an", "the" and similar terms used in the context of the present invention (especially in the context of the claims) are to be construed to cover both the singular and plural unless otherwise indicated herein or clearly contradicted by the context.

As used herein, the term "containing" shall include "consisting of", "essentially consisting of" and "comprising".

As used herein, the term "graphite" describes the well-known carbon modification of graphene-layered material where carbon atoms are arranged in a honeycomb lattice. A large variety of graphitic materials and analytical methods thereof are known. A.C. Ferrari (Solid State Communications, 143, 1-2, 2007, 47-57) report on Raman spectroscopy of graphene and graphite: Disorder, electron-phonon coupling, doping and nonadiabatic effects. V.A. Sethuraman. et al. (J. of Power Sources, 195(11), 2010, 3655-3660) report on surface structural disordering in Graphite upon Lithium Intercalation / Deintercalation. M. Hadi. et al. (S. Afr. J. Chem., 2016, 69, 79-87) report on anodized Edge-plane Pyrolytic Graphite for Electroanalysis.

The present invention will be better understood by reference to the **figures**.

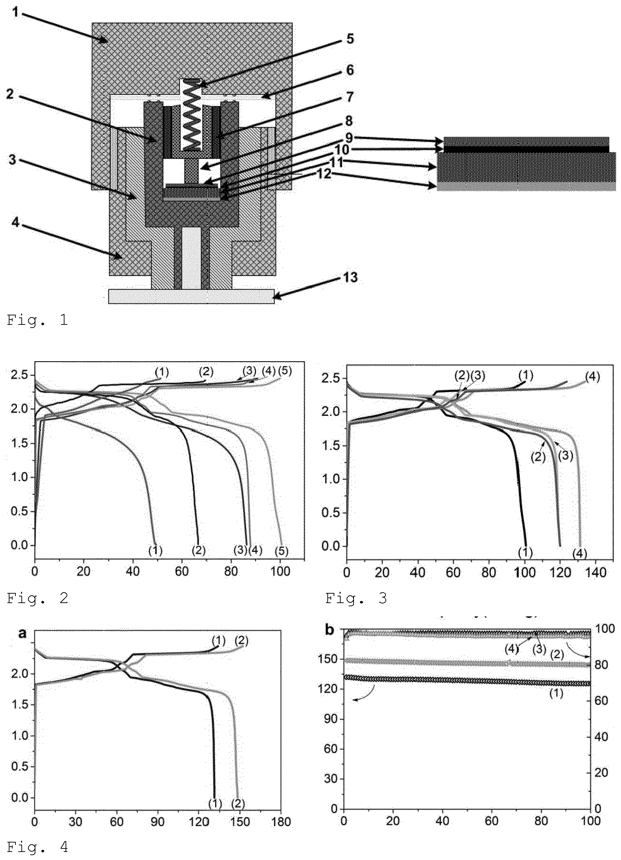

**Fig. 1****.** shows a schematic drawing of the inventive battery, as used in the examples and showing the graphite flakes as the active material (10). It is apparent that this figure shows a prototype set-up as generally accepted in research and development. Such prototype is useful for showing the performance of the materials used (cathode material, anode material, ionic liquid), but will not necessarily reflect a commercial product in term of geometry and further components. The reference numbers used in fig. 1 are as follows: (1), (4) top, bottom (stainless steel); (2) inner part (Aluminium); (3) insulator (polypropylene); (5) spring; (6) sealing ring; (7) insulator (polypropylene) ; (8) bar (tungsten); (9) foil (tungsten); (10) cathode (graphite flakes according to the invention); (11) electrolyte (ionic liquid in glass fiber separator); (12) anode (Aluminium foil); (13) electrode contact.
**Fig. 2****.** shows voltage profiles @ current 100mA/g measured with a set-up according to fig. 1 using non-processed graphite material; x-axis capacity (mAh/g); y-axis cell potential (V; Al³⁺ vs. Al); of large (5), small (3), ultra-small (1) natural graphite flakes, kish synthetic graphite flakes (4) and pyrolytic graphite foil ((2); according to Lin, for comparison). [Galvanostatic cycling curve for pyrolytic graphite foil was taken from Lin paper², which was measured at a current of 66mAh/g and in 0.01-2.45V voltage window.]
**Fig. 3****.** shows voltage profiles @ current 100mA/g measured with a set-up according to fig. 1 using non-processed and processed graphite materials; x-axis capacity (mAh/g); y-axis cell potential (V; Al³⁺ vs. Al); large graphite flakes ((1), non-processed, for comparison); processed large graphite flakes according to ex.1 (4); processed large graphite flakes according to ex.2 (3); processed large graphite flakes according to ex. 3 (3).
**Fig. 4****.** shows voltage profiles (a) and cyclic stability with corresponding coulombic efficiencies (b) @ current 100mA/g measured with a set-up according to fig. 1 and the material of example 1; each measured using constant current (CC; (1) - cyclic stability; (3) - coulombic efficiency) and constant current - constant voltage (CCCV; (2) - cyclic stability; (4) - coulombic efficiency) protocols. In fig. a: x-axis capacity (mAh/g); y-axis cell potential (V; Al³⁺ vs. Al). In fig. b: x-axis: cycle number; y-axis (left): capacity (mAh/g); y-axis (right): coulombic efficiency (%).
**Fig. 5****.** Optical images of natural large graphite flakes, non-processed.
**Fig. 6****.** SEM images of natural small graphite flakes, non-processed.

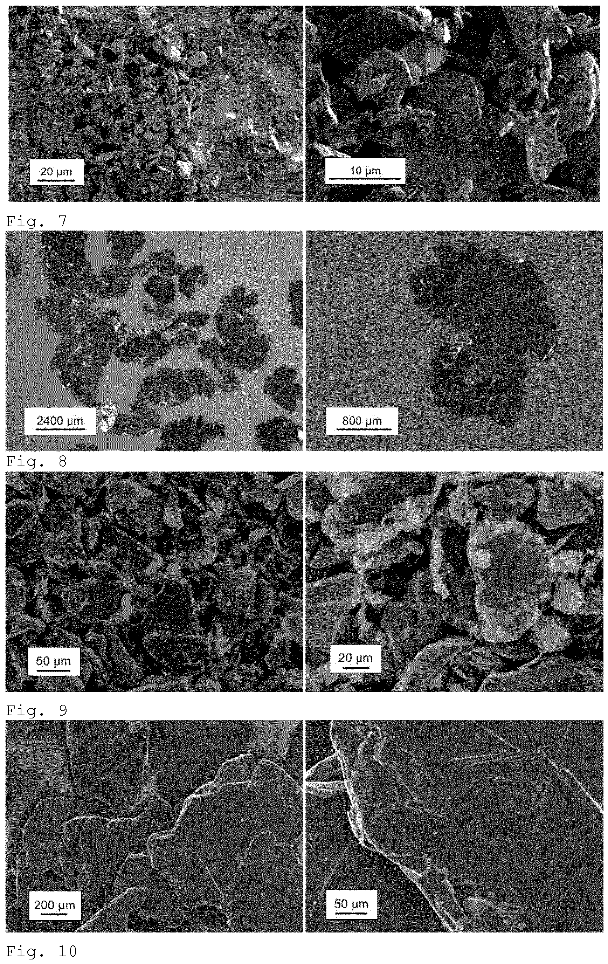

**Fig. 7****.** SEM images of natural ultra-small graphite flakes, non-processed.
**Fig. 8****.** Optical images of synthetic kish graphite flakes, non-processed.
**Fig. 9****.** SEM images of natural large graphite flakes after sonication according to ex.1 (power = 30%, time = 30min).
**Fig. 10****.** SEM images of natural large graphite flakes after ball milling according to ex. 2 (Speed = 500rpm, time = 60min).

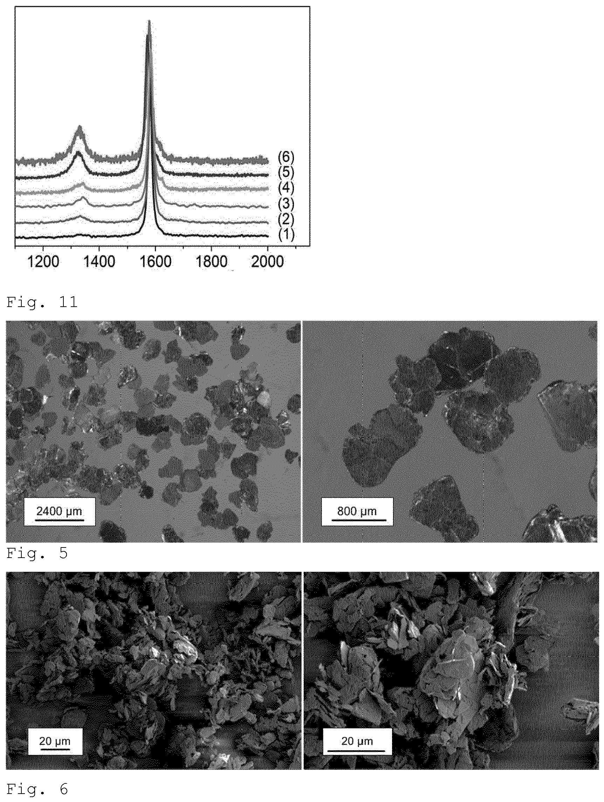

**Fig. 11****.** Raman spectra of graphite flakes and of pyrolytic graphite foil (for comparison); x-axis Raman shift (cm⁻¹), y-axis intensity. (1) pyrolytic graphite foil (for comparison); (2) processed graphite flakes according to example 1; (3) kish graphite flakes (as purchased); (4) large graphite flakes (as purchased); (5) small graphite flakes (as purchased); (6) ultra-small graphite flakes (as purchased). The data presented in (1) where obtained by purchasing the pyrolytic graphite foil from the same source as disclosed in Lin et al., followed by testing under the same conditions as graphite flakes.

In more general terms, in a **first aspect**, the invention relates to An Aluminium - ionic liquid - graphite - battery comprising a graphite cathode, characterized in that the graphite of said cathode is flake-shaped. It comes as a surprise that the problem of low capacity and high cost of cathode for AlLGBs can be solved by using graphite flakes as cathode material. AILGBs based on such cathode material show much higher capacities when compared to Lin et al, Jiao et al and Sun et al (cited above). While Lin et al, Jiao et al and Sun et al report on capacities of about 70mAh/g and lower, the capacities of the inventive AILGBs are up to 148mAh/g. This aspect of the invention shall be explained in further detail below:

The term **"Aluminium - ionic liquid - graphite - battery**", also abbreviated as AILGB, is understood by the skilled person. The term describes batteries where an ionic liquid serves as the electrolyte, the anode contains aluminium and the cathode contains graphite. Alternative terms are also used, including Aluminium-ion battery, Aluminium battery, Aluminium graphite battery. The above term AILGB appears to more accurately reflect the operation principle of the battery. For instance, the term Aluminium-ion battery appears incorrect, as there are no Al³⁺ ions, in a free form, moving between electrodes. Instead, Al-chloride complex ions are moving.
Accordingly, an inventive AILGB comprises at least the following elements: Anode containing or consisting of Aluminium, Cathode containing or consisting of graphite flakes as described herein, Electrolyte, selected from the group of ionic liquids, connecting these two electrodes, housing.
AILGBs includes both, rechargeable batteries (secondary cells) as well as single use batteries.

The term "**cathode**" is known in the field; it denotes the positive element of a battery when in use; e.g. it accepts electrons during discharge and the electrode material is thus being reduced.
The shape of the cathode may be implemented in said battery in any known form, and may be adapted to the specific use by the skilled person.
As outlined above, the cathode contains (i.e. comprises or consists of) graphite in the form of flakes. These flakes may be present in any form, including graphite in the form of bulk (non-compressed) flakes; graphite in the form of compressed flakes; or graphite in the form of compressed or non-compressed flakes on a substrate. Suitable substrates include conductive materials, such as metals, alloys, polymers, which are optionally coated. In this context, the term "compressed" relates to technical steps of manufacturing the electrode, not the graphite flakes. Such compressing is known in the field and may be effected by calendaring.

The term "**graphite**" is discussed above and includes both forms, alpha and beta. The term graphite further includes both, natural graphite (i.e. the mineral graphite) and synthetic graphite. Examples of natural graphite include so-called amorphous (nanocrystalline) graphite, flake graphite, and vein graphite. Examples of synthetic graphite include pyrolytic graphite, highly oriented pyrolytic graphite (HOPG), synthetic graphite flakes, kish graphite; Kish graphite being particularly suited.

In an advantageous embodiment, graphite has a d-spacing (d₀₀₂; a reflection in the powder **X-ray** diffraction pattern close to 2Theta = 26.57° when using Cu-Kalpha irradiation) of 0.3375 ≥ d₀₀₂ ≥ 0.3354 nm, as determined by powder X-Ray diffraction.

In an advantageous embodiment, graphite has an intensity ratio of D-Band: G-Band of 1:10, preferably 1:100, as determined by **Raman** spectroscopy. It is well known [see, for example, A.C. Ferrari (Solid State Communications, 143,1-2, 2007, 47-57.] that Raman spectroscopy is able to detect crystal imperfection of graphite-based materials, although without telling the exact type of defects. The Raman spectrum of graphite normally shows sharp peak at 1580cm⁻¹ (on Raman shift scale, G band, corresponding to the in-plane symmetric C-C stretches) and additional peak at 1350cm⁻¹ (D band, indicating the structural disorder of graphite such as stacking disorder, defects etc.). The ratio of intensity of D band to intensity of G band (I_{D}/I_{G} ratio) is therefore useful for quantitate estimation of the defectiveness in graphite flakes.

The term "**flakes**" is known in the field, particularly when describing graphite. Flake graphite can be described as plate-like particles with hexagonal, angular or irregular edges. Suitable flakes have an average plane size with largest diameter of 5-5000 µm, preferably 10-2500 µm; a thickness of 1-200 µm, preferably 5-50 µm; and an aspect ratio (plane size : thickness) of 100:1 to 5:1; preferably 50:1 to 10:1. These parameters may be determined visually. To that end, a microscopic image of the flakes is taken and the average plane size and thickness are determined by optical microscopy using the average value of ten different flakes.
It is understood that the term graphite flakes, as used herein, does not encompass porous graphite. Thus, graphite flake has a dense structure comprising a multitude of graphite microcrystals (I), one single graphite microcrystal comprising a multitude of graphene layers (II) and an individual graphene layer (III).
It has been found that flake forms of graphite particles which can be observed in vein graphite, natural flakes of graphite and in certain types of synthetic graphites (such as kish graphite) show much better performance in comparison with other morphologies of graphite particles. Graphite flakes are available by known methods, e.g. from nature by its separation from the metamorphic rocks or by using synthetic ways (such as steelmaking process or high temperature treatment processes of carbonaceous sources like petroleum coke and coal tar pitch).
Due to its origin, graphite flakes may contain minor amounts of ash, moisture, graphite in other forms and other components (collectively: **impurities**). It was found beneficial, if at least 90%, preferably at least 95%, much preferably 99% of the graphite present is in the form of graphite flakes as described herein.

In an advantageous embodiment, the invention relates to graphite flakes which were subject to a **mechanical treatment.** We also find that the processing of natural graphite flakes significantly influences the properties of inventive AILGBs. Particularly, the charge storage capacity may be improved by a mechanical treatment of the graphite flakes. Without being bound to theory, it is believed that such mechanical treatment influences the structure on an atomic level and thereby its electrochemical properties. Suitable mechanical treatments include sonication, ball milling, knife milling and combinations thereof.

The term "**ionic liquid**" is known in the field, particularly as electrolytes useful in batteries. A broad range of ionic liquids which show Al electroplating may be used in the inventive batteries; in principle all ionic liquids compatible with the cathode material, anode material and housing material. Examples of such ionic liquids include materials of the type AlX₃ - RX, where X is halogen, particularly chlorine. R may be any suitable organic residue, particularly of the imidazolium-type or of the ammonium-type. Specific examples of ionic liquids include AlCl₃ mixed with either of 1-butyl-3-methylimidazolium chloride, 1-allyl-3-methylimidazolium chloride and trimethylphenylammonium chloride and AlCl₃/1-ethyl-3-methylimidazolium chloride, the latter being preferred.

In a **second aspect**, the invention relates to a process for manufacturing an AILGB as described herein. This aspect of the invention shall be explained in further detail below.

The manufacturing, or assembling, of batteries such as AILGBs as disclosed herein is known per se. The manufacturing, or obtaining, of graphite flakes is also known per se. Advantageously, the graphite flakes are mechanically treated. An AILGB of this invention is manufactured comprising the step of combining graphite flakes as described herein with other elements of an AILGB.

The invention specifically provides for a method of manufacturing AILGBs as described herein, particularly in the first aspect of the invention, comprising the steps of:
- providing graphite flakes as described herein, particularly mechanically treated graphite flakes;
- assembling an electrode comprising graphite flakes,
- combining the thus obtained electrode with the other elements of an AILGB, (housing, anode, ionic liquid and optional further elements) to obtain an AILGB.

The invention also provides for a further method of manufacturing AILGBs as described herein, particularly in the first aspect of the invention, comprising the steps of:
- providing a housing of the AILGB,
- filling graphite flakes as described herein, particularly mechanically treated graphite flakes into said housing to thereby form a cathode;
- combining the thus obtained semi-finished product with the other elements of an AILGB, (housing, anode, ionic liquid and optional further elements) to obtain an AILGB.

In a **third aspect**, the invention relates to the use of mechanically treated graphite flakes as described herein as cathode material, particularly as cathode material in AILGBs. This aspect of the invention shall be explained in further detail below:
Suitable graphite flakes may be of natural origin or may be synthetic graphite flakes. The terms "mechanical treatment", "cathode" and "AILGBs" are discussed above and are applicable likewise.

To further illustrate the invention, the following **examples** are provided. These examples are provided with no intend to limit the scope of the invention.

### 1. MATERIALS

Large graphite flakes (99.9%, ∼10mesh, 43319, Alfa Aesar), small graphite flakes (99.8%, -325 mesh, 43209, Alfa Aesar), ultra-small graphite flakes (99%, 43480, Alfa Aesar), Kish graphite flakes (grade 300, Graphene Supermarket), Pyrolytic graphite foil (0.017mm, Suzhou Dasen Electronics Materials), AlCl₃ (99%, granules, Acros), 1-Ethyl-3-methylimidazolium chloride (99%, Iolitec), 1-butyl-3-methylimidazolium chloride (99%, Iolitec), 1-allyl-3-methylimidazolium chloride (≥98%, Aldrich), trimethylphenylammonium chloride (≥98%, Aldrich); Al foil (MTI Corporation), W foil (MTI Corporation), Glass microfiber separator (GF/D, Cat No.1823-257, Whatman).

### 2. METHODS

### 2.1 Preparation of electrolytes

Ionic liquid electrolyte based on EMImCl was prepared by slow mixing of appropriate amount of EMImCl solid powder and AlCl₃ granules in an argon glovebox, reaching a AlCl₃/EMImCl=1.3 molar ratio. During mixing, highly isothermal reaction takes and a light yellow liquid is formed. Afterward, ionic liquid electrolyte was treated with Al foil at 150°C for 6h until the liquid became nearly colorless.

### 2.2 Assembly and testing of aluminum batteries

All different graphite materials were pre-dried at 200°C under vacuum overnight to remove residual traces of water. No binder and solvent were used for preparation of current collectors. Homemade, reusable Al-W cells were assembled in an argon-filled glove box (O₂ < 1 ppm, H₂O < 1 ppm) using two layers of glass fiber separators. Aluminum foil served as both reference and counter electrodes. As electrolyte, AlCl₃/EMImCl with molar ratios 1.3 was mainly used for measuring all different types of graphite materials. The cells were assembled as follow (Figure 1). Aluminum foil was placed on the bottom of the Aluminum cylinder and then layers of glass fiber separators were placed on the top. Afterwards, 4 mg (over area of ca. 0.5cm²) of active material were homogeneously distributed on the surface of the glass fiber separator, and then covered by W foil. Ionic liquid electrolyte was inserted at the edge of the separator. Afterwards, W bar was placed on the top of W foil and cell was closed. Cells were cycled between 0.01 - 2.45 V on a MPG2 multi-channel workstation (Bio-Logic). The obtained capacities were normalized to the mass of an active material.

### 2.3 Sonication treatment of graphite flakes (example 1)

Commercial large graphite flakes (0.2 g) from Alfa Aesar (99.9%, ∼10mesh, catalog number: 43319) were placed into a 4-ml glass vial with 3.5 ml of ethanol and were sonicated for different times and with different powers using Sonopuls ultrasonic homogenizer HD2200. Afterwards, sonicated graphite flakes were washed three times with ethanol and dried under vacuum at 80°C for 12 h. It has been found that the best electrochemical results can be obtained for graphite flakes sonicated for 30min at 30% power.

### 2.4 Ball milling treatment of graphite flakes (example 2)

Commercial large graphite flakes (0.5 g) from Alfa Aesar (99.9%, ∼10mesh, catalog number: 43319) were placed into 12-ml stainless steel ball milling container with 50 grinding balls (diameter: 5 mm) and were milled for different times and at various speeds using Fritsch Planetary Micro Mill (Pulverisette 7, classic line). Afterwards, the so-ball-milled graphite flakes were dried under vacuum at 80°C for 12 h. Graphite flakes ball-milled at 500rpm for 60min exhibited the best electrochemical performance.

### 2.5 Knife-milling treatment of graphite flakes (example 3)

Commercial large graphite flakes (10g) from Alfa Aesar (99.9%, ∼10mesh, catalog number: 43319) were placed into a commercial Blender (Betty Bossi / Fust MixFIT) and knife milled for different time. Nitrogen flow (0.2 Bar) was applied to Blender container in order to cause flying of heavy large graphite flakes during milling. Afterwards, knife milled graphite flakes were dried under vacuum at 80 °C for 12h. Graphite flakes knife-milled for 15min showed the best electrochemical performance.

### 3. CHARACTERIZATION

Scanning electron microscopy (SEM) images were obtained with a M400 SEM microscope. Wide-angle powder X-ray diffraction (XRD) spectra were collected on STOE STADI P powder X-ray diffractometer.
Raman spectra were measured using high-resolution confocal Raman microscope (Ntegra Spectra, from NT-MDT) equipped with a 632.8 nm HeNe laser.
Optical images were obtained using LEICA M205 C microscope. Average plane size of large natural graphite flakes and kish synthetic graphite flakes was measured by optical microscopy using average length value of the 10 different flakes. Average size of small, ultra-small graphite flakes and large sonicated graphite flakes was measured by Laser particle analyzer (Malvern2000). Average size of ball-milled and knife-milled natural large graphite flakes was measured using scanning electron microscopy

**Table 1 (a): non - processed graphite**

| | Natural graphite | | | Synthetic graphite | |
|---|---|---|---|---|---|
| | Large flakes | small flakes | Ultra-small flakes | Kish flakes | Pyrolytic foil **Comparison** |
| Capacity, mAh/g (CC) | 100 | 86 | 50 | 88 | 67* |
| Average voltage, V | 2 | 1.9 | 1.6 | 2 | 1.85* |
| Average plane size, µm | 1095 | 15 | 8 | 2052 | |
| Average plane surface area, mm² | 0.86 | | | 2.49 | |
| Average thickness, µm | 62 | | | 106 | |
| Ratio (plane size : thickness) | 18 | | | 19 | |
| BET surface area, m²/g | 0.03 | 7.05 | 8.7 | 0.47 | 0.53** |
| **d₀₀₂, Å (3.354 Å - ideal value)** | **3.354** | **3.366** | **3.372** | **3.356** | **3.359**** |
| I_{D}/I_{G} | 0.09 | 0.2 | 0.27 | 0.13 | 0.04** |

| | | | | | |
|---|---|---|---|---|---|
| * data taken from Lin et al; ** measured data using the same material as Lin et al. | | | | | |

**Table 1 (b) processed graphite flakes**

| | Processed natural graphite | | |
|---|---|---|---|
| | ex.1 | ex.2 | ex.3 |
| Capacity, mAh/g (Constant current charging, CC) | 132* | 120 | 120 |
| Average voltage, V | 2 | 2 | 1.94 |
| Average plane size, µm | 40 | 800 | 37 |
| Average plane surface area, mm² | | | |
| Average thickness, µm | | | |
| Average plane size/thickness ratio | | | |
| BET surface area, m²/g | 1.6 | | 3.9 |
| **d₀₀₂, Å (3.354 Å - ideal value)** | **3.356** | **3.364** | **3.364** |
| I_{D}/I_{G} | 0.056 | 0.058 | 0.16 |

| | | | |
|---|---|---|---|
| *Capacity (CCCV) 148 mAh/g | | | |

### 4. Ionic liquids

The above experiments were repeated using large GF and different ionic liquids AlCl₃/1-butyl-3-methylimidazolium chloride (BMImCl), AlCl₃/1-Allyl-3-methylimidazolium (AMIMCl) and AlCl₃ / Trimethylphenyl-ammonium chloride (TMPACl), molar ratio of AlCl₃/RX equals 2).
The results obtained show that these ionic liquids are also suited for manufacturing AILGBs, but voltage profiles and capacities are inferior when compared to EMImCl.

## Claims

1. An Aluminium - ionic liquid - graphite - battery comprising a graphite cathode, **characterized in that** the graphite of said cathode is flake-shaped, said flakes having
i. an average plane size diameter of 5-5000 µm, preferably 10-2500 µm;
ii. a thickness of 1-200 µm, preferably 5-50 µm;
iii.an aspect ratio (plane size : thickness) of 100:1 to 5:1; preferably 50:1 to 10:1.

2. The battery according to claim 1, **characterized in that**
i. said graphite has a d-spacing (d₀₀₂) of 0.3375 ≥ d₀₀₂ ≥ 0.3354 nm, as determined by powder X-Ray diffraction; and / or
ii. said graphite has a ratio of D-Band : G-Band of 1:10, preferably 1:100, as determined by Raman spectroscopy.

3. The battery according to any of the preceding claims, **characterized in that** the graphite is selected from
i. natural graphite and / or
ii. synthetic graphite, particularly kish graphite.

4. The battery according to any of the preceding claims, **characterized in that** said graphite is obtained by mechanical treatment, said mechanical treatment preferably being selected from one or more of
i. sonication;
ii. ball milling; and
iii. knife milling.

5. The battery according to any of the preceding claims, **characterized in that** the cathode contains
i. said graphite in the form of a flakes;
ii. said graphite in the form of compressed flakes; or
iii.said graphite in the form of compressed or uncompressed flakes on a substrate.

6. A method for manufacturing an Aluminium - ionic liquid - graphite - battery comprising the steps of
a. providing graphite flakes, preferably as defined in any of claims 1 - 5,;
b. providing a housing, an electrolyte material from the group of ionic liquids, an Aluminium anode and a separator;
c. combining the elements of step (a) and (b) to obtain said battery.

7. Use of mechanically treated graphite flakes, particularly as defined in claims 1 - 5, as a cathode material in Aluminium - ionic liquid - graphite - batteries.

8. The use of claim 7 where the graphite flakes are obtained by mechanical treatment, particularly obtained by sonication.
